Europäisches Patentamt

(19) European Patent Office

Office européen des brevets

(11) Publication number: **0 059 375**
A2

(12) # EUROPEAN PATENT APPLICATION

(21) Application number: 82101210.1

(22) Date of filing: 18.02.82

(51) Int. Cl.³: **C 08 L 69/00**
**C 08 L 25/10**

(30) Priority: 26.02.81 US 238643

(43) Date of publication of application:
08.09.82 Bulletin 82/36

(84) Designated Contracting States:
DE FR GB IT NL

(71) Applicant: GENERAL ELECTRIC COMPANY
1 River Road
Schenectady New York 12305(US)

(72) Inventor: Liu, Ping Yuan
124 Tanager Court
Naperville Illinois 60540(US)

(74) Representative: Schüler, Horst, Dr. European Patent
Attorney et al,
Kaiserstrasse 41
D-6000 Frankfurt/Main 1(DE)

(54) Composition.

(57) A novel composition which comprises
(a) an aromatic carbonate polymer,
(b) a butadiene-styrene copolymer, and an
(c) acrylate copolymer which is a copolymer of a $C_1$-$C_5$ acrylate and a $C_1$-$C_5$ methacrylate.

EP 0 059 375 A2

## COMPOSITION

## BACKGROUND OF THE INVENTION

High molecular weight aromatic carbonate polymers (aromatic carbonate polymer) are well known for their toughness as evidenced by their impact strength and other high performance characteristics. However, because of their relative difficulty in processing as illustratively exemplified by the temperature necessary to mold articles, certain thin wall intricate articles useful in engineering applications are very difficult if not impossible to economically mold. Therefore, it would be advantageous to have an aromatic carbonate polymer containing composition which is readily processable but substantially maintains aromatic carbonate polymer toughness characteristics in thin section test systems. Concurrent upgrading of the toughness characteristics in thick section test systems is also desirable.

## DESCRIPTION OF THE INVENTION

A new composition has been discovered which has these aforesaid toughness characteristics of an aromatic carbonate polymer but is readily processable. In accordance with the invention there is a composition which comprises

(a) an aromatic carbonate polymer,

(b) a butadiene-styrene copolymer, and an

(c) acrylate copolymer which is a copolymer of a $C_{1-5}$ acrylate and a $C_{1-5}$ methacrylate.

Another aspect of the invention is the addition of an acrylate-olefin copolymer to the above composition. This new quaternary composition has increased toughness at low temperatures in comparison to the ternary composition.

Aromatic carbonate polymers in the sense of the present invention are to be understood as homopolycarbonates and copolycarbonates and mixtures thereof which have average molecular weights of about 8,000 to more than 200,000 preferably of about 20,000 to 80,000 and an I.V. of 0.40 to 1.0 dl/g as measured in methylene chloride at 25°C. These polycarbonates are derived from dihydric phenols such as, for example, 2,2-bis(4-hydroxyphenyl) propane (bisphenol-A), bis(4-hydroxyphenyl) methane, 2,2-bis(4-hydroxy-3-methylphenyl) propane, 4,4-bis(4-hydroxyphenyl) heptane, 2,2-(3,5,3',5'-tetrachloro-4,4'-dihydroxyphenyl) propane, 2,2-(3,5,3',5'-tetrabromo-4,4'-dihydroxydiphenyl) propane, and (3,3'-dichloro-4,4'-dihydroxydiphenyl) methane. Other dihydric phenols which are also suitable for use in the preparation of the above polycarbonates are disclosed in U.S. Patent Nos. 2,999,835; 3,028,365; 3,334,154 and 4,131,575. Bisphenol-A is preferred.

These aromatic polycarbonates can be manufactured by known processes, such as, for example, by reacting a dihydric phenol with a carbonate precursor such as phosgene in accordance with methods set forth in the above-cited literature and U.S. Patent Nos. 4,018,750 and 4,123,436, or by transesterification processes such as are disclosed in U.S. Patent No. 3,153,008, as well as other processes known to those skilled in the art.

The aromatic polycarbonates utilized in the present invention also include the polymeric derivatives of a dihydric phenol, a dicarboxylic acid, and carbonic acid, or carbonic acid derivatives, for example, phosgene, such as are disclosed in U.S. Patent No. 3,169,131.

It is also possible to employ two or more different dihydric phenols or a copolymer of a dihydric phenol with a glycol or with hydroxy or acid terminated polyester, or with a dibasic acid in the event a carbonate copolymer or interpolymer rather than a homopolymer is desired for use in the preparation of the aromatic polycarbonate utilized in the practice of this invention. Also employed in the practice of this invention can be blends of any of the above materials to provide the aromatic polycarbonate.

Branched polycarbonates, such as are described in U.S. Patent No. 4,001,184, can also be utilized in the practice of this invention, as can blends of a linear polycarbonate and a branched polycarbonate.

The preferred aromatic carbonate polymer is a homopolymer derived from bisphenol-A as the dihydric phenol.

The "acrylate" copolymer utilized in the present invention is a copolymer of a $C_1$-$C_5$ methacrylate and a $C_1$-$C_5$ acrylate, wherein the term "$C_1$-$C_5$" represents both saturated and unsaturated, straight or branched chained aliphatic hydrocarbon radicals having from 1 to 5 carbon atoms.

Preferred acrylates for use in the above copolymer are methyl acrylate, ethyl acrylate, isobutyl acrylate, 1,4-butanediol diacrylate, n-butyl acrylate, and 1,3-butylene diacrylate. Preferred methacrylates for use in this copolymer include methyl methacrylate, isobutyl methacrylate, 1,3-butylene dimethacrylate, butyl methacrylate and ethyl methacrylate.

The acrylate portion of the copolymer, based on the total weight of the copolymer, can range from about 50 to about 85 weight percent. The methacrylate portion of the copolymer can range from about 15 to about 50 weight percent.

The preferred acrylate copolymer for use in this invention is a copolymer of n-butyl acrylate and methyl methacrylate in which the weight ratio of the n-butyl acrylate fraction to the methyl methacrylate fraction in the copolymer is about 3 to 2.

Suitable acrylate copolymers, as defined above, can be prepared by methods well known to those skilled in the art or can be obtained commercially. For example, Rohm and Haas' Acryloid® KM 330 copolymer, which is a copolymer of n-butyl acrylate and methyl methacrylate, is suitable for use in the present invention.

In the butadiene-styrene copolymer utilized herein, the butadiene portion of the copolymer, based on the total weight of the copolymer, can range from about 15 to about 40 weight percent. The styrene portion of the copolymer can range from about 60 to about 85 weight percent.

In the preferred butadiene-styrene copolymer for use herein, the weight ratio of the styrene fraction to the butadiene fraction ranges from about 2 to 1 to about 3 to 1.

Suitable butadiene-styrene copolymers, as defined above, can be prepared by methods well known to those skilled in the art or can be obtained commercially. For example, Phillips Petroleum K-Resin® KR03 BDS polymer is suitable for use in the present invention.

The fourth polymer, acrylate-olefin copolymer, when present in the composition, is a copolymer of a $C_2$-$C_5$ olefin and a $C_1$-$C_5$ acrylate. The term "$C_1$-$C_5$" is as defined above and the term "$C_2$-$C_5$" represents a straight or branched chain aliphatic hydrocarbon radical having from 2 to 5 carbon atoms. The preferred olefins are ethylene, propy-

00§9375

lene and isobutylene. Preferred acrylates which are utilized in the olefin-acrylate copolymer are ethyl acrylate, n-butyl acrylate, 1,3-butylene diacrylate, methyl acrylate, 1,4-butanediol diacrylate and isobutyl acrylate.

The acrylate portion of the olefin-acrylate copolymer, based on the total weight of the copolymer, can range from about 10 to about 30 weight percent. The olefin portion of the copolymer can range from about 70 to about 90 weight percent.

The preferred olefin-acrylate copolymer for use in this invention is an ethylene-ethyl acrylate copolymer, in which the weight ratio of the ethylene fraction to the ethyl acrylate fraction is about 4.5 to 1.

Suitable olefin-acrylate copolymers, as defined above, can be prepared by methods well known to those skilled in the art or can be obtained commercially. For example, Union Carbide's Bakelite® DPD-6169 ethylene-ethyl acrylate copolymer is suitable for use in the present invention.

The amount of the butadiene-styrene copolymer present in the composition of the present invention can range from about six to about sixty percent, by weight, per hundred parts of the total composition. Preferably, the butadiene-styrene copolymer is present in amounts of from about ten to about forty weight percent of the total composition. The amount of the acrylate copolymer present in the composition can vary from about 2 to about 6 weight percent of the total composition. Preferably, the acrylate copolymer is present in amounts of from about 3 to about 5 weight percent of the total composition.

The amount of the olefin-acrylate copolymer present in the composition of the present invention can range from about 0.5 to about 2 parts, by weight percent of the total composition, preferably about 0.75 to about 1.5 weight percent. The remainder of the composition is aromatic carbonate polymer. The term "total composition" is the sum of all the polymeric constituents of the composition.

It is also regarded to be among the features of this invention to include in the composition of the invention conventional additives for purposes such as reinforcing, coloring or stabilizing the composition in conventional amounts.

The compositions of the invention are prepared by mechanically blending the high molecular weight aromatic polycarbonate with the butadiene-styrene copolymer and the acrylate polymer by conventional methods. Double or twin screw extrusion is preferred, particularly where additives are added to the composition.

## EXAMPLES

The following examples are set forth to illustrate the invention and is not to be construed to limit the scope of the invention. All percentages are on a weight basis unless otherwise specified.

## EXAMPLE 1

Eighty-six (86) parts of an aromatic polycarbonate, derived from 2,2-bis(4-hydroxyphenyl) propane and having an intrinsic viscosity (I.V.) in the range of from about 0.46 to about 0.49 dl/g as determined in methylene chloride solution at 25°C, was mixed with three(3) parts of a copolymer of n-butyl acrylate and methyl methacrylate (hereinafter acrylate copolymer), said copolymer having a weight ratio of n-butyl-acrylate to methyl methacrylate of about 3 to 2; one (1) part of an olefin acrylate copolymer having a weight ratio of ethylene:ethyl acrylate of 4.5:1; ten parts of a butadiene-styrene copolymer (hereinafter referred to as BDS), said copolymer having a weight ratio of styrene to butadiene of from about 2 to 1 to about 3 to 1. The ingredients were then blended together by mechanically mixing them in a laboratory tumbler and the resulting mixture was fed to an extruder which was

operated at about 255°C. The resulting extrudate was comminuted into pellets. The pellets were injection molded at about 250°C to 270°C into test specimens of about 5" by 1/2" by 1/4" and 5" by 1/2" by 1/8", the latter dimension being the specimen thickness. Izod impact strengths of these specimens are measured according to the Notched Izod test, ASTM D256, and are set forth in Table I. The superscript refers to the percent ducility at the foot lb. value. The sample labeled CONTROL was a bisphenol-A polycarbonate having an I.V. from about 0.46 to about 0.49 dl/g. No other polymers were present in the control.

## EXAMPLES 2-5

Further samples of the composition of the invention were prepared as in Example 1 each containing the same kind and quantity of acrylate copolymer and olefin acrylate copolymer as in Example 1, (3% and 1% respectively). However, the amount of BDS was increased in each sample to 15%, 20%, 25%, and 30% respectively. Each increase in BDS concentration brought about a concomitant decrease in aromatic polycarbonate concentration. The samples were tested as in Example 1. Below are the results for the impact test.

## TABLE 1

| EXAMPLE | BDS WT.% | NOTCHED IZOD, ft-lb/in. | |
|---------|----------|-------------------------|-------------------------|
| | | 1/8 inch | 1/4 inch |
| Control | -- | $14.8^{100}$ | $1.6^{0}$ |
| 1 | 10 | $14.7^{100}$ | $11.1^{100}$ |
| 2 | 15 | $13.4^{100}$ | $10.4^{100}$ |
| 3 | 20 | $13.4^{100}$ | $9.9^{100}$ |
| 4 | 25 | $11.4^{100}$ | $9.1^{100}$ |
| 5 | 30 | $11.4^{100}$ | $9.7^{100}$ |

-8-

The results demonstrate that the impact strength of the new composition is substantially retained in comparison to the control with respect to the 1/8" samples. The impact strengths are substantially improved in the 1/4" samples. Processability of the novel composition is significantly improved over the control.

WHAT IS CLAIMED IS:

1.  A composition which comprises in admixture

(a) an aromatic carbonate polymer,

(b) a butadiene-styrene copolymer, and

(c) an acrylate copolymer which is a copolymer of a $C_1$-$C_5$ methacrylate and a $C_{1-5}$ acrylate.

2.  A composition in accordance with claim 1 wherein the acrylate copolymer is from about two to about six weight percent of the total composition.

3.  A composition in accordance with claims 1 and 2 wherein the butadiene-styrene copolymer is from about six to about sixty weight percent of the total composition.

4.  A composition in accordance with claim 2 wherein the butadiene-styrene copolymer is from about ten to about forty weight percent.

5.  A composition in accordance with claims 3 and 4 wherein the acrylate copolymer is from about three to about five weight percent.

6.  A composition in accordance with claims 2 and 5 wherein in the acrylate copolymer, the methacrylate is selected from the group consisting of methyl methacrylate, 1,3-butylene dimethacrylate, isobutyl methacrylate, butyl methacrylate and ethyl methacrylate and the acrylate is selected from the group consisting of 1,4-butanediol diacrylate, isobutyl acrylate, methyl acrylate, ethyl acrylate, n-butyl acrylate and 1,3-butylene diacrylate.

7.  A composition in accordance with claims 5 and 6 wherein the aromatic carbonate polymer is a homopolymer.

8.  A composition in accordance with claim 7 wherein the polymer is derived from bisphenol-A.

9.  A composition in accordance with claim 8 wherein in the acrylate-methacrylate copolymer, the methacrylate is methyl methacrylate and the acrylate is n-butyl acrylate.

10.  A composition is accordance with claim 9 wherein in the acrylate-methacrylate copolymer, the weight ratio of methyl methacrylate to n-butyl acrylate ranges from about 1/2 to about 2/1.

11.  A composition in accordance with claim 3 wherein an olefin-acrylate copolymer is present in the composition in from about 0.5 to about 2.0 weight percent of the total composition.

12.  A composition in accordance with claim 11 wherein the olefin content of the copolymer is from about 10 to about 30 weight percent.

13.  A composition in accordance with claim 12 wherein the olefin is ethylene, propylene or isobutylene and the acrylate is ethyl acrylate, n-butyl acrylate, 1,3-butylene diacrylate, methyl acrylate, 1,4-butanediol diacrylate and isobutyl acrylate.